# EUROPÄISCHE PATENTSCHRIFT

(11) **EP 2 396 188 B1**
(45) Veröffentlichungstag und Bekanntmachung des Hinweises auf die Patenterteilung: **04.04.2018**
(21) Anmeldenummer: 10706924.7
(22) Anmeldetag: 11.02.2010
(51) Int. Cl.: B60L 1/00, B60L 9/30, B60L 11/12

(54) **ANORDNUNG ZUM BETREIBEN VON VERBRAUCHERN IN EINEM SCHIENENFAHRZEUG MIT ELEKTRISCHER ENERGIE, WAHLWEISE AUS EINEM ENERGIEVERSORGUNGSNETZ ODER AUS EINER MOTOR-GENERATOR-KOMBINATION**
CIRCUIT FOR SUPPLYING ELECTRIC ENERGY IN A RAIL VEHICLE, FROM A SUPPLY NETWORK OR FROM AN ENGINE GENERATOR
SYSTÈME DE FOURNISSAGE D'ÉNERGIE ÉLECTRIQUE POUR VÉHICULE FERROVIAIRE, À PARTIR D'UN RÉSEAU ÉLECTRIQUE OU UN MOTEUR-GÉNÉRATEUR

(30) Priorität: 12.02.2009 DE 102009008549
(43) Veröffentlichungstag der Anmeldung: 21.12.2011
(73) Patentinhaber: Bombardier Transportation GmbH, 10785 Berlin (DE)
(72) Erfinder: STILL, Ludwig, 64683 Einhausen (DE)
(74) Vertreter: Bressel, Burkhard
(86) Internationale Anmeldenummer: PCT/EP2010/000963
(87) Internationale Veröffentlichungsnummer: WO 2010/091899

(56) Entgegenhaltungen:
- WO-A2-2006/138130
- DD-A1- 220 271
- FEILCKE F: "DIE ELEKTRISCHE AUSTUESTUNG DER ZWEIKRAFTLOKOMOTIV DM30AC FUER DIE LONG ISLAND RAIL ROAD" 1. April 1998 (1998-04-01), ZEITSCHRIFT FUR EISENBAHNWESEN UND VERKEHRSTECHNIK. DIE EISENBAHNTECHNIK + GLASERS ANNALEN, GEORG SIEMENS VERLAGSBUCHHANDLUNG. BERLIN, DE, PAGE(S) 139 - 143 , XP000750677 ISSN: 0941-0589 Seite 141; Abbildung 3
- DVORACEK V ET AL: "ELEKTRISCHE DOPPELLOKOMITIVEN FUER DIE NORDSKANDINAVISCHE ERZBAHN//ELECTRIC TWIN-LOCOMITIVES FOR NORTH-SCANDINAVIAN IRON-ORE RAILWAY LINE//LOCOMOTIVES ELECTRIQUES COUPLEES EN DOUBLE POUR LA LIGNE MINIERE EN NORD-SCANDINAVIE" 1. August 2001 (2001-08-01), ELEKTRISCHE BAHNEN, OLDENBOURG INDUSTRIEVERLAG, MUNCHEN, DE, PAGE(S) 311 - 324 , XP001087022 ISSN: 0013-5437 Seite 319, mittlere Spalte - Seite 323, mittlere Spalte; Abbildungen 10,11,13

## Beschreibung

Die Erfindung betrifft eine Anordnung zum Betreiben von Verbrauchern in einem Schienenfahrzeug mit elektrischer Energie, wobei die Anordnung wahlweise von einem Energieversorgungsnetz oder von einer Motor-Generator-Kombination mit elektrischer Energie versorgbar ist bzw. versorgt wird. Die Erfindung betrifft ferner ein Schienenfahrzeug mit einer derartigen Anordnung und ein Verfahren zum Betreiben der Anordnung und des Schienenfahrzeugs.

Die Erfindung betrifft insbesondere auch eine Schaltungsanordnung mit einer Vorschrift zur Steuerung des Betriebs der Schaltungsanordnung, um Schienenfahrzeuge, die überwiegend über das elektrische Energieversorgungsnetz mit elektrischer Energie versorgt werden, in bestimmten Betriebssituationen auch ohne das Netz betreiben zu können. Zu den besonderen Betriebssituationen gehören z.B. der Rangierbetrieb ohne Kontakt zum Netz, der Betrieb bei Netzausfall oder der Betrieb über kürzere Fahrstrecken ohne Kontakt zwischen Schienenfahrzeug und Netz (z.B. Unterbrechung der Stromschiene oder fehlende Oberleitung).

Es sind Hybrid-Antriebssysteme für die Einspeisung elektrischer Energie und - bei Bedarf - alternativ annähernd gleich großer dieselelektrischer Einspeisung in einen Gleichspannungszwischenkreis bekannt. Aus diesem Zwischenkreis werden die Verbraucher des Schienenfahrzeugs (insbesondere Hilfsbetriebe und zumindest ein Traktionsmotor) über einen Wechselrichter mit Energie versorgt.

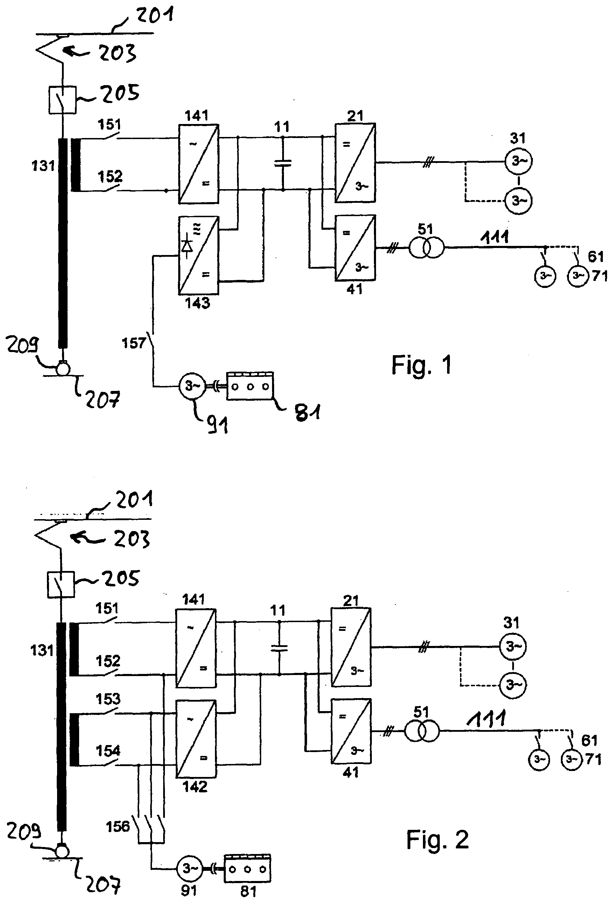

Bei diesen Hybridschaltungen zur wahlweisen Einspeisung aus dem Fahrleitungsnetz oder einer Dieselgeneratoreinheit ist der von dem Dieselmotor angetriebene Generator (wie in Fig. 1 und Fig. 2 gezeigt) über eine 3-phasige Wechselstromleitung mit dem elektrischen Energieversorgungssystem des Schienenfahrzeugs verbunden.

In Fig. 1 ist der entlang der Fahrstrecke verlegte Fahrdraht mit dem Bezugszeichen 201 bezeichnet. Das Schienenfahrzeug kontaktiert den Fahrdraht 201 über einen Stromabnehmer 203, welcher über einen Hauptschalter 205 mit der Primärseite eines Haupttransformators 131 sowie über dessen Sekundärseite und über Schalter 151, 152 mit der Wechselspannungsseite eines Gleichrichters 141 verbunden ist. An der Gleichspannungsseite des Gleichrichters 141 ist ein Gleichspannungszwischenkreis 11 angeschlossen. Zur Versorgung zumindest eines Traktionsmotors 31 weist die Anordnung zumindest einen Traktionswechselrichter 21 auf, dessen Gleichspannungsseite mit dem Gleichspannungszwischenkreis 11 verbunden ist. Der zumindest eine Fahrmotor 31 ist mit der Wechselspannungsseite des Traktionswechselrichters 21 verbunden. Außerdem sind Hilfsbetriebe 71, die nicht unmittelbar Traktion des Schienenfahrzeugs erzeugen, über eine Hilfsbetriebeleitung 111 und über Schalter 61 mit der Wechselspannungsseite eines Hilfsbetriebewechselrichters 41 verbunden. Dabei ist zwischen die Wechselspannungsseite und die Hilfsbetriebeleitung 111 ein Transformator 51 geschaltet, um die an der Wechselspannungsseite anliegende hohe Wechselspannung auf das niedrigere Spannungsniveau der Hilfsbetriebe 71 herunterzutransformieren. Die Gleichspannungsseite des Hilfsbetriebewechselrichters 41 ist ebenfalls mit dem Gleichspannungszwischenkreis 11 verbunden. Die Primärseite des Transformators 131 ist üblicherweise über ein oder mehrere Räder 209 des Schienenfahrzeugs in elektrischem Kontakt mit der Fahrschiene 207.

Um den Betrieb des Schienenfahrzeugs auch dann zu ermöglichen, wenn keine elektrische Energie aus dem Energieversorgungsnetz über den Fahrdraht 201 entnommen werden kann, verfügt das Schienenfahrzeug außerdem über einen Motor 81, in der Regel einen Dieselmotor. Bei Betrieb des Motors 81 treibt dieser einen Generator 91 an, der über eine dreiphasige Leitungsverbindung, welche von einem Schalter 157 auftrennbar ist, mit einem Gleichrichter 143 verbunden ist. Bei diesem Gleichrichter 143 kann es sich insbesondere um eine so genannte B6-Brücke handeln. Die Gleichspannungsseite des Gleichrichters 143 ist ebenfalls mit dem Gleichspannungszwischenkreis 11 verbunden.

Unter Bezugnahme auf Fig. 2 wird eine Variante beschrieben. Dabei sind gleiche oder funktionsgleiche Teile und Elemente mit denselben Bezugszeichen bezeichnet und werden nicht erneut beschrieben.

Der Haupttransformator 131 an der Netzseite des Gleichspannungszwischenkreises 11 verfügt über zwei parallele sekundäre Wicklungen. Die zweite Wicklung ist wie die erste Wicklung über Schalter 153, 154 und über einen zweiten Gleichrichter 142 mit dem Gleichspannungszwischenkreis 11 verbunden. Der Generator 91 ist über eine dreiphasige Schalteinrichtung 156 trennbar mit den beiden Wechselspannungsphasen der zweiten Sekundärwicklung und mit einer Wechselspannungsphase der ersten Sekundärwicklung des Haupttransformators 31 verbunden. Die von dem Generator 91 erzeugte elektrische Energie wird daher nicht wie in Fig. 1 über einen speziell für den Motor-Generator-Betrieb vorgesehenen Gleichrichter in den Gleichspannungszwischenkreis 11 eingespeist, sondern über die auch während des Netzbetriebes des Schienenfahrzeugs verwendeten Gleichrichter 141, 142.

In beiden Fällen jedoch muss der Generator 91 eine hohe Spannung erzeugen, bzw. bei Betrieb der Gleichrichter 141 und/oder 142 als Hochsetzsteller für die an den Generatorklemmen auftretende gepulste und entsprechend hohe Zwischenkreisspannung ausgelegt sein.. Der Motor, der den Generator antreibt, verfügt dementsprechend ebenfalls über eine hohe mechanische Leistung. In der Regel ist die Motor-Generator-Kombination in der Lage, über die entsprechenden Gleichrichter annähernd dieselbe elektrische Leistung in den Gleichspannungszwischenkreis einzukoppeln, die auch bei Netzbetrieb über Fahrdraht, Stromschiene oder dergleichen netzseitig in den Gleichspannungszwischenkreis eingespeist wird. Daher ist der Aufwand für die zusätzliche Möglichkeit, das Schienenfahrzeug mit elektrischer Energie aus der Motor-Generator-Kombination zu versorgen, verhältnismäßig hoch.

Wird keine Mehrsystemfähigkeit gefordert, d.h. ist das Schienenfahrzeug, insbesondere die Lokomotive oder das Triebfahrzeug, nicht sowohl für den Dauerbetrieb am Energieversorgungsnetz und wahlweise mit der Motor-Generator-Kombination ausgelegt, erscheint dieser Aufwand nicht erforderlich zu sein. Wenn nur für den oben erwähnten außerordentlichen Betrieb in besonderen Situationen (wie Rangierfahrten, bei kurzzeitigem Netzausfall oder dergleichen) ein Betrieb mit einer Motor-Generator-Kombination möglich sein soll, erscheint der Aufwand für einen über Gleichrichter zur direkten Zwischenkreiseinspeisung entsprechend ausgelegten Generator, sowie die zugehörigen Schalt- und Gleichrichtereinheiten zu hoch zu sein.

Feilcke F.: Die elektrische Ausrüstung der Zweikraftlokomotive DM30AC für die Long Island Rail Road" 1. April 1998 (1998-04-01), Zeitschrift für Eisenbahnwesen und Verkehrstechnik. Die Eisenbahntechnik + Glasers Annalen, Georg Siemens Verlagsbuchhandlung. Berlin, DE, Seiten 139-143, XP000750677, ISSN: 0941-0589 beschreibt ein Zugkonzept für die Long Island Rail Road (LIRR). In Abschnitt 3.2 "Zugsammelschiene" auf Seite 141, linke Spalte wird im zweiten Absatz erwähnt, dass die Lokomotive DE30AC nicht wie bisher üblich mit Strom aus einem eigenen Generator versorgt wird. Dies bezieht sich auf die so genannten Hilfsbetriebe, wie Heizung, Klimaanlage, Lüftung und Steckdosen, die über eine in die USA HEP genannte Zugsammelschiene mit Drehstrom betrieben werden. Grund für den Verzicht auf den eigenen Generator für die Hilfsbetriebe war die angestrebte Reduktion des Lärmpegels der Lokomotive im Bahnhof.

DD 220 271 A1 beschreibt eine Schaltungsanordnung für elektrische Verbrauchergruppen in Schienenfahrzeugen, insbesondere Reisezugwagen. Es wird erwähnt, dass bei einer Energieversorgung des Wagens im Standbetrieb aus einem Drehstromortsnetz der als Ladegleichrichter ausgebildete Drehstromwechselrichter zugleich die Wagenbatterie laden und auch die angeschlossenen Gleichstromverbraucher mit Energie von gleicher Spannung versorgen kann.

Es ist eine Aufgabe der vorliegenden Erfindung, eine Anordnung der eingangs genannten Art sowie ein entsprechendes Verfahren zum Versorgen von Schienenfahrzeugen mit elektrischer Energie anzugeben, die mit einem Motor oder anderen netzunabhängigen Einheit en geringerer Antriebsleistung auskommen und bei denen auch der Aufwand für elektrische Einrichtungen für den netzunabhängigen Betrieb reduziert ist.

Die Erfindung geht von der Überlegung aus, dass für den anhand von Fig. 1 und Fig. 2 beschriebenen Motor-Generatorbetrieb zusätzliche elektrische Komponenten erforderlich sind, wie der Gleichrichter 143 gemäß Fig. 1 und die Schalteinrichtungen 156, 157 (siehe Fig. 2 bzw. Fig. 1). Würde es sich bei dem Schienenfahrzeug um ein Fahrzeug handeln, das an einem Gleichspannungsnetz betrieben wird, wäre an der Eingangsseite des Gleichspannungszwischenkreises kein Gleichrichter vorhanden und müsste ein solcher Gleichrichter zusätzlich vorgesehen werden.

Weiterhin geht die Erfindung davon aus, dass die Zwischenkreisspannung nicht unter einen bestimmten Mindestwert fallen darf, um die Versorgung der Hilfsbetriebe und einen sicheren Betrieb des Stromrichters zu gewährleisten. Häufig liegt diese Mindestspannung bei dem 0,5- bis 0,7-fachen der Nennspannung des Gleichspannungszwischenkreises. Handelsübliche komplette Energieversorgungseinheiten (mit einem Motor und einem Generator, der von dem Motor angetrieben wird) arbeiten mit einer elektrischen Nennspannung von 400 V (Drehstrom) bei 50 Hz bzw. 480 V bei 60 Hz. Wenn solche Energieversorgungseinheiten an den Gleichspannungszwischenkreis angeschlossen werden sollen, müssen sie in der Regel auf eine für den Betrieb der Traktionswechselrichter und Hilfsbetriebe erforderliche Mindestspannung zwischen 1200 V und 1800 V angehoben werden. Dies ist z.B. durch einen gepulsten Stromrichter oder durch Zwischenschaltung eines Transformators auf der Drehstromseite des Gleichrichters möglich. Alternativ könnte der Generator hinsichtlich seiner Nennspannung und Drehzahl für höhere Werte als die zuvor genannten Werte ausgelegt sein. Dies erfordert jedoch eine spezielle Energieversorgungseinheit, die nicht mehr handelsüblich ist.

Es wird daher vorgeschlagen, den Generator der Motor-Generator-Kombination an die Hilfsbetriebeleitung anzuschließen. Wenn (wie üblicherweise der Fall) zwischen dem Hilfsbetriebewechselrichter und den Hilfsbetrieben ein Transformator zum Heruntertransformieren der Ausgangsspannung des Hilfsbetriebewechselrichters vorgesehen ist, ist der Generator der Motor-Generator-Kombination vorzugsweise auf der Niederspannungsseite des Transformators an die Hilfsbetriebeleitung angeschlossen.

Zumindest für den kurzzeitigen Betrieb der Fahrmotoren oder den längerfristigen Betrieb der Fahrmotoren (d.h. der Traktionsmotoren des Schienenfahrzeugs) mit geringer Traktionsleistung reicht die von der Motor-Generator-Kombination in die Hilfsbetriebeleitung eingespeiste elektrische Leistung aus. Diese elektrische Leistung wird durch den Transformator auf ein höheres Spannungsniveau transformiert, der Wechselspannungsseite des Hilfsbetriebewechselrichters zugeführt, durch den Hilfsbetriebewechselrichter gleichgerichtet und in den Gleichspannungszwischenkreis eingespeist. Durch passive Gleichrichterfunktion des Hilfsbetriebewechselrichters und entsprechende Wahl des Übersetzungsverhältnisses des Transformators oder durch geeignete Steuerung des als aktiver Gleichrichter arbeitenden Hilfsbetriebewechselrichters kann die in dem Gleichspannungszwischenkreis erforderliche Mindestspannung gewährleistet werden. Der oder die Traktionswechselrichter entnehmen aus dem Gleichspannungszwischenkreis die für den kurzzeitigen Betrieb oder Notbetrieb erforderliche elektrische Antriebsleistung.

Grundsätzlich ist es auch möglich, dass auf den Transformator verzichtet wird, z. B. wenn die Zwischenkreisspannung entsprechend niedrig ist. Jedoch wird in der Regel eine galvanische Entkopplung der Hilfsbetriebe von dem Zwischenkreis gefordert, die durch einen Transformator auf einfache Weise realisiert werden kann.

Der zuvor geschilderte Fall mit einem Gleichspannungszwischenkreis, einem Hilfsbetriebewechselrichter und einem an dessen Wechselspannungsseite angeschlossenen Transformator ist lediglich ein einfaches Ausführungsbeispiel. In der Praxis kommen häufig andere Konfigurationen des elektrischen Energieversorgungssystems bei einem Schienenfahrzeug vor. Z.B. kann der Hilfsbetriebewechselrichter mehrere Hilfsbetriebeleitungen speisen und/oder können mehrere Gleichspannungszwischenkreise vorgesehen sein. Auf konkrete Ausführungsbeispiele wird noch anhand der beigefügten Figuren näher eingegangen.

Durch den elektrischen Anschluss der netzunabhängigen Einheit (insbesondere des Generators der Motor-Generator-Kombination) an die Hilfsbetriebeleitung wird die Einheit kostengünstig angeschlossen. Insbesondere sind keine zusätzlichen Gleichrichter erforderlich und kann die elektrische Leistung des Generators bei niedriger elektrischer Spannung eingespeist werden. Aus diesem Grund können insbesondere Motoren und Generatoren für die Motor-Generator-Kombination eingesetzt werden, die für eine niedrigere Leistung ausgelegt sind als beim normalen Betrieb des Schienenfahrzeugs am Energieversorgungsnetz. Insbesondere können daher die erwähnten handelsüblichen Energieversorgungseinheiten eingesetzt werden. Reicht die Leistung einer solchen Einheit nicht aus, kann eine weitere Einheit oder können mehrere weitere Einheiten elektrisch an die Hilfsbetriebeleitung oder an eine weitere Hilfsbetriebeleitung des Schienenfahrzeugs angeschlossen werden.

Die Erfindung ermöglicht daher die kostengünstige Integration einer Stromerzeugungseinheit kleiner Leistung in ein Schienenfahrzeug, mit deren Hilfe ein netzunabhängiger Betrieb möglich ist. Insbesondere sind folgende Anwendungen möglich: Überbrückung von Fahrstrecken ohne Fahrdraht oder Stromschiene; leichter Rangierbetrieb; Notbetrieb bei Netzausfall.

Die genannten Energieversorgungseinheiten können insbesondere wie oben erwähnt für Nennspannungen von 400 V bei 50 Hz Drehstrom bzw. 480 V bei 60 Hz Drehstrom ausgelegt sein. Außer dem Motor (vorzugsweise Dieselmotor) und dem Generator können die Einheiten weitere zum autarken Betrieb ohne Anschluss an das Energieversorgungsnetz erforderliche Komponenten aufweisen, insbesondere Kühleinrichtung für Motor und/oder Generator (z.B. so genannter Rückkühler und Lüfter), Anlasser für den Motor und/oder Treibstofftank für den Verbrennungskraftstoff des Motors.

Insbesondere wird Folgendes vorgeschlagen: Eine Anordnung zum Betreiben von Verbrauchern in einem Schienenfahrzeug mit elektrischer Energie, wobei die Anordnung wahlweise von einem Energieversorgungsnetz oder von einer netzunabhängigen elektrischen Energieversorgungseinheit, insbesondere einer Motor-Generator-Kombination, mit elektrischer Energie versorgbar ist, wobei die Anordnung Folgendes aufweist:
- einen Gleichspannungszwischenkreis, der mit dem Energieversorgungsnetz verbunden ist, wenn die Anordnung von dem Energieversorgungsnetz versorgt wird,
- zumindest einen Traktionswechselrichter, der gleichspannungsseitig mit dem Gleichspannungszwischenkreis verbunden ist und an dessen Wechselspannungsseite ein oder mehrere Traktionsmotoren des Schienenfahrzeugs angeschlossen sind,
- einen Hilfsbetriebewechselrichter, der gleichspannungsseitig mit dem Gleichspannungszwischenkreis verbunden ist und der wechselspannungsseitig mit einer Primärseite eines Hilfsbetriebetransformators verbunden ist, wobei an einer Sekundärseite des Hilfsbetriebetransformators über eine elektrische Hilfsbetriebeleitung Hilfsbetriebe angeschlossen sind, wobei die Hilfsbetriebe im Gegensatz zu dem zumindest einen Traktionsmotor nicht unmittelbar einer Traktion des Schienenfahrzeugs dienen,
- (im Fall der Motor-Generator-Kombination) ein Generator der Kombination, an den der Motor, insbesondere eine Verbrennungskraftmaschine, anschließbar oder angeschlossen ist.
die elektrischen Energieversorgungseinheit ist elektrisch mit der Hilfsbetriebeleitung verbunden, sodass bei Versorgung der Anordnung von der elektrischen Energieversorgungseinheit von der Einheit erzeugte elektrische Energie über die Hilfsbetriebeleitung, den Hilfsbetriebetransformator und den Hilfsbetriebewechselrichter in den Gleichspannungszwischenkreis übertragen wird und für den Betrieb des zumindest einen Traktionsmotors zur Verfügung steht.

Ferner wird vorgeschlagen: Ein Verfahren zum Betreiben von Verbrauchern in einem Schienenfahrzeug mit elektrischer Energie, wobei zumindest ein Traktionsmotor des Schienenfahrzeugs durch Umrichten einer Gleichspannung eines Gleichspannungszwischenkreises betrieben wird und der Gleichspannungszwischenkreis wahlweise von einem Energieversorgungsnetz oder von einer netzunabhängigen elektrischen Energieversorgungseinheit, insbesondere einer Motor-Generator-Kombination, mit elektrischer Energie versorgt wird, wobei:
- auch Hilfsbetriebe des Schienenfahrzeugs, die im Gegensatz zu dem zumindest einen Traktionsmotor nicht unmittelbar einer Traktion des Schienenfahrzeugs dienen, über einen Hilfsbetriebewechselrichter, der gleichspannungsseitig mit dem Gleichspannungszwischenkreis verbunden ist und der wechselspannungsseitig mit einer Primärseite eines Hilfsbetriebetransformators verbunden ist, und über eine an einer Sekundärseite des Hilfsbetriebetransformators angeschlossene elektrische Hilfsbetriebeleitung mit elektrischer Energie aus dem Gleichspannungszwischenkreis versorgt werden,
- bei Versorgung des Gleichspannungszwischenkreises mit Energie von der netzunabhängigen elektrischen Energieversorgungseinheit (z. B. die durch einen Betrieb eines Motors, insbesondere einer Verbrennungskraftmaschine, erzeugte mechanische Energie durch einen Generator in elektrische Energie umgewandelt wird) Energie von der elektrischen Energieversorgungseinheit in die Hilfsbetriebeleitung eingespeist wird, durch den Hilfsbetriebetransformator transformiert und durch den Hilfsbetriebewechselrichter gleichgerichtet und in den Gleichspannungszwischenkreis eingespeist wird, um den zumindest einen Traktionsmotor zu betreiben.

Folgende Vorteile ergeben sich bei Einspeisung in die Hilfsbetriebeleitung:
- Kostengünstige handelsübliche komplette Energieversorgungseinrichtungen mit 480V/60Hz oder 400V/50Hz Generatoren sind einsetzbar, da keine hohe elektrische Spannung benötigt wird.
- Es ist kein zusätzlicher Gleichrichter erforderlich.
- Bei Fahrzeugen für den Betrieb an Wechselspannungs-Netzen ist ein spezieller gepulster Betrieb des Gleichrichters an der Eingangseite des Gleichspannungszwischenkreises (wie im Fall der Fig. 2) zur Spannungsanhebung im Zwischenkreis nicht erforderlich.
- Der Aufwand für Schalteinrichtungen zwischen dem Generator und dem Energieversorgungssystem des Schienenfahrzeugs ist gering, da die jeweilige Schalteinrichtung für verhältnismäßig niedrige elektrische Spannungen ausgelegt sein kann.
- Zumindest der Teil der elektrischen Energie, der unmittelbar dem Betrieb der Hilfsbetriebe dient, muss nicht über den Gleichspannungszwischenkreis geleitet werden. Der Hilfsbetriebewechselrichter wird daher entlastet.
- Bei mehreren Hilfsbetriebewechselrichtern mit Transformator können durch geeignete ein- und ausschaltbare elektrische Verbindungen die Leistungsfähigkeit und die Ausfallsicherheit erhöht werden.
- Die für den Stromrichterbetrieb zweckmäßige Zwischenkreisspannung oder erforderliche Spannung von z. B. 0,5 bis 0,7 der Nennzwischenkreisspannung wird durch Nutzung des Hilfsbetriebetransformators ohne weitere aktive oder passive Einrichtungen erreicht.

Beim fahrdrahtlosen Betrieb, wie z.B. beim Rangierbetrieb, wird die Traktion des Schienenfahrzeugs häufig über längere Zeitspannen hinweg nicht benötigt. Außerdem wird dabei meist nur ein Teil der Hilfsbetriebe benötigt. Die für diesen speziellen Betriebseinsatz erforderliche minimale Hilfsbetriebeleistung liegt bei Lokomotiven typischerweise zwischen 25 kW bis 50 kW. Die benötigten Hilfsbetriebe sind z. B. Luftkompresser für die Druckluft-Bremsanlage, das Batterieladegerät zum Laden der Hauptbatterie (d.h. elektrischer und/oder elektrochemischer Energiespeicher) des Schienenfahrzeugs und ggf. Klimagerät zur Klimatisierung des Führerraumes.

Ein fahrdrahtloser Betrieb durch Entnahme der elektrischen Energie ausschließlich aus einer Batterie oder einem Batteriesystem ist derzeit aus Kosten-, Gewichts- und Wartungsgründen unzweckmäßig. Batterien werden während der relativ langen Stillstandszeiten aufgrund des Energiebedarfs der Hilfsbetriebe so weitgehend entladen, dass für die Traktion keine oder nur noch eine geringe Energiemenge verfügbar ist. Betriebszeiten von 30 bis 90 Minuten ohne Netzanschluss können daher derzeit wirtschaftlich sinnvoll nur mit einer konventionellen Verbrennungskraftmaschine realisiert werden.

Eine Kombination von Verbrennungskraftmaschine mit einem zusätzlichen Energiespeicher (z. B. Batterie) ist dagegen vorteilhaft. Hierbei deckt das Verbrennungsaggregat die Grundlast ab. Während der langen Stillstandszeiten bleibt der Energiespeicher unbelastet und wird ggf. mit der im Überschuss vorhandenen, nicht von den Hilfsbetrieben benötigten Energie des Generators aufgeladen. Bei Traktionsanforderung (d.h. bei einem hohen Leistungsbedarf) wird aus dem Energiespeicher Energie entnommen und zusätzlich über den Stromrichter auf den Zwischenkreis übertragen und zur Steigerung der Traktionsleistung genutzt. Auf ein konkretes Ausführungsbeispiel wird noch näher eingegangen. Der zusätzliche Energiespeicher kann über eine Induktivität und jeweils eine Diode mit einem der beiden Wechselspannungsanschlüsse des netzseitigen Gleichrichters verbunden sein. Entsprechendes gilt, wenn mehr als ein Gleichspannungszwischenkreis mit jeweils einem netzseitigen Gleichrichter vorhanden ist. Der zusätzliche Energiespeicher kann jedoch über jeweils eine Diode auch direkt mit dem höheren Potential des Gleichspannungszwischenkreises verbunden sein.

Allgemein formuliert wird bevorzugt, dass ein zusätzlicher elektrisch ladbarer und elektrisch entladbarer Energiespeicher, der zusätzlich zu der Bordbatterie der Schienenfahrzeugs vorhanden ist, vorgesehen ist, wobei der zusätzliche Energiespeicher über eine Schalteranordnung mit den unterschiedlichen Potenzialen des Gleichspannungszwischenkreises verbindbar ist. Es kann aber auch lediglich die Bordbatterie zum Ausgleich des schwankenden Leistungsbedarfs genutzt werden.

Als bevorzugte Ausgestaltung des erfindungsgemäßen Verfahrens wird daher vorgeschlagen, dass ein zusätzlicher Energiespeicher, der zusätzlich zu der Bordbatterie vorhanden ist und der elektrisch ladbar und elektrisch entladbar ist, aufgeladen wird und, bei Versorgung des Gleichspannungszwischenkreises mit Energie von der Motor-Generator-Kombination, durch Verbinden des zusätzlichen Energiespeichers mit dem Gleichspannungszwischenkreis entladen wird, um eine höhere Traktionsleistung des zumindest einen Traktionsmotors zu erreichen. In gleicher Weise kann jedoch auch mit der Bordbatterie verfahren werden.

Unter einem zusätzlichen Energiespeicher wird auch eine Brennstoffzelle oder Kombination von Brennstoffzellen verstanden.

Der zusätzliche Energiespeicher weist elektrische Anschlüsse zum Laden und Entladen auf. Über diese Anschlüsse ist er bei einer bevorzugten Ausführungsform der Anordnung mit einer Phase eines an den Gleichspannungszwischenkreis angeschlossenen gepulsten Stromrichters verbindbar. Unter gepulst wird verstanden, dass Phasen des Stromrichters als Gleichstromsteller betrieben werden, indem Schalter (z.B. IGBTs oder GTOs) wiederholt ein- und ausgeschaltet werden und mit Hilfe einer Induktivität auf diese Weise die gewünschte Spannungsanpassung, erzielt wird. Dieser Stromrichterteil dient während seines normalen Betriebs einem bestimmten Zweck, insbesondere der Gleichrichtung einer Wechselspannung eines Energieversorgungsnetzes an der Eingangsseite des Gleichspannungszwischenkreises oder als Traktionswechselrichter der Umrichtung der Gleichspannung des Gleichspannungszwischenkreises für den Betrieb eines Traktionsmotors. Wenn dieser Stromrichterteil für seinen normalen Betrieb nicht benötigt wird, kann eine Phase des Stromrichters daher zum Hochsetzen der Gleichspannung an den Anschlüssen des zusätzlichen Energiespeichers auf ein höheres Gleichspannungsniveau des Gleichspannungszwischenkreises genutzt werden.

Ist der Stromrichter ein Gleichrichter (Pulsgleichrichter) an der Eingangsseite (der Seite zum AC-Stromversorgungsnetz, z. B. zum Oberleitungs-Fahrdraht oder zu einer Stromschiene entlang der Strecke) des Gleichspannungszwischenkreises, wird dieser Stromrichter nicht für den Zweck der Einspeisung von Netzenergie in den Zwischenkreis benötigt, wenn die Anordnung von der Motor-Generator-Kombination versorgt wird. Der Stromrichterteil, d.h. einzelne Phasen können dann als Hochsetzsteller genutzt werden. Insbesondere wenn es sich bei dem Stromversorgungsnetz aber um ein Gleichspannungs(DC)-Versorgungsnetz handelt, steht kein Gleichrichter an der Eingangsseite zur Verfügung. In diesem Fall, aber auch in anderen Fällen können die Phasen des Traktionswechselrichters, der momentan nicht zwingend benötigt wird, da eine Traktion auch mit anderen Traktionsmotoren erzeugt werden kann, als Gleichstromsteller zum Hochsetzen des Spannungsniveaus genutzt werden.

Wenn der zusätzliche Energiespeicher nicht über ein Ladegerät aufgeladen wird, kann er direkt von dem Gleichspannungszwischenkreis aufgeladen werden. In diesem Fall wird eine Phase des Stromrichters als Tiefsetzsteller betrieben, d.h. reduziert die im Gleichspannungszwischenkreis vorhandene Gleichspannung auf das tiefere Ladespannungsniveau des zusätzlichen Energiespeichers.

Bei einer Ausgestaltung der Anordnung ist der zusätzliche Energiespeicher mit einer Gleichspannungsseite eines Ladegeräts verbunden, dessen Wechselspannungsseite mit der Hilfsbetriebeleitung verbunden ist, so dass der zusätzliche Energiespeicher während der Versorgung der Anordnung mit elektrischer Energie aus dem Energieversorgungsnetz aufladbar ist. Er ist darüber hinaus aber auch aufladbar, wenn bei Betrieb der netzunabhängigen Energieversorgungseinheit überschüssige elektrische Leistung zur Verfügung steht. Z.B. wenn über längere Zeitspannen keine Traktion benötigt wird können diese Zeitspannen zum Aufladen des zusätzlichen Energiespeichers und/oder der Bordbatterie genutzt werden.

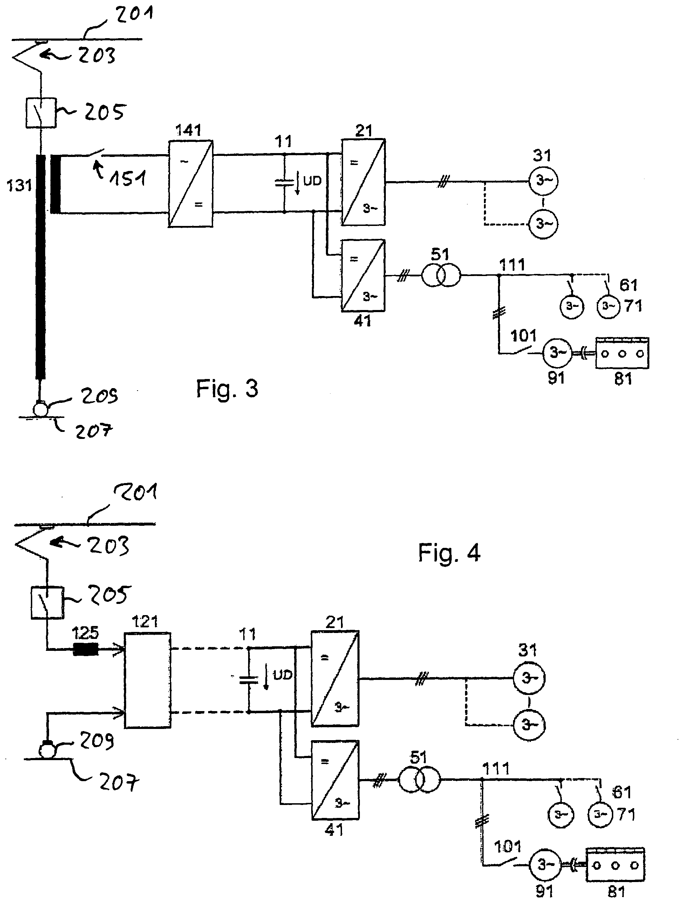

Bei dem Energieversorgungsnetz kann es sich um ein Gleichspannungsnetz (DC-Netz) handeln, wobei z.B., wie noch anhand von Fig. 4 beschrieben werden wird, in dem elektrischen Pfad zwischen dem Energieversorgungsnetz und dem Gleichspannungszwischenkreis ein Hauptschalter, eine Filterdrossel und/oder ein Hoch- oder Tiefsetzsteller angeordnet sein können. Wenn es sich bei dem Energieversorgungsnetz um ein Wechselspannungsnetz (AC-Netz) handelt, kann zwischen dem Gleichspannungszwischenkreis und dem Energieversorgungsnetz z.B. ein gepulster Gleichrichter, ein Haupttransformator und ein Hauptschalter angeordnet sein.

Bei der Hilfsbetriebeleitung handelt es sich üblicherweise um eine so genannte Hilfsbetriebesammelschiene.

Insbesondere handelt es sich bei der netzunabhängigen elektrischen Energieversorgungseinheit um eine Einheit, die lediglich eine kleine elektrische Leistung erzeugen kann. Klein ist hier relativ im Verhältnis zu der elektrischen Nennleistung bei Betrieb am Energieversorgungsnetz zu verstehen. Insbesondere ist die Leistung der Einheit klein, wenn sie kleiner als ein Fünftel der Nenn-Speiseleistung bei Netzbetrieb ist. Bei Lokomotiven beträgt die Leistung der Einheit z.B. maximal 400 kW, insbesondere maximal 250 kW.

Vorzugsweise ist der Hilfsbetriebewechselrichter durch einen Schalter von der Primärseite des Hilfsbetriebetransformators trennbar. Dadurch kann die Einspeisung von elektrischer Energie aus der netzunabhängigen Einheit in den Gleichspannungszwischenkreis besser gesteuert werden. Insbesondere kann der Schalter geöffnet werden, wenn die Einheit lediglich über die Hilfsbetriebeleitung Hilfsbetriebe versorgen muss, Traktionskraft aber nicht benötigt wird. Wenn zwei Hilfsbetriebeleitungen und zwei Gleichspannungszwischenkreise vorhanden sind, kann der Schalter auch zur Steuerung der elektrischen Energieflüsse von dem jeweils gewünschten Zwischenkreis in die Hilfsbetriebeleitung und/oder umgekehrt genutzt werden, insbesondere wenn zwischen den Zwischenkreisen und/oder den Hilfsbetriebeleitungen elektrische Verbindungen vorhanden sind. Bei mehreren Hilfsbetriebenleitungen ist vorzugsweise jeweils zwischen der Primärseite des Hilfsbetriebetransformators und dem zugeordneten Hilfsbetriebewechselrichter ein Schalter vorhanden. Ferner wird in diesem Fall bevorzugt, dass alternativ oder auch auf der Sekundärseite zumindest eines der Hilfsbetriebetransformatoren ein Schalter vorhanden ist. Wenn außerdem sowohl auf der Primärseite als auch auf der Sekundärseite der Hilfsbetriebetransformatoren eine elektrische Verbindung zwischen den Hilfsbetriebeleitungen besteht, sind zahlreiche vorteilhafte Steuerungsmöglichkeiten gegeben, um den Betrieb des elektrischen Energieversorgungssystems zu optimieren.

Die Hilfsbetriebeleitung ist vorzugsweise dreiphasig ausgeführt, so dass sie insbesondere mit Drehstrom betrieben werden kann. Dies gilt auch für etwa vorhandene weitere Hilfsbetriebeleitungen. Die erwähnten Schalter sind dementsprechend vorzugsweise ebenfalls mehrphasig ausgeführt.

Wenn ein zweiter Gleichspannungszwischenkreis und eine zweite Hilfsbetriebeleitung vorhanden sind, wird folgende Ausführungsform bevorzugt, bei der die Anordnung außerdem folgendes aufweist:
- einen zweiten Gleichspannungszwischenkreis, der mit dem Energieversorgungsnetz verbunden ist, wenn die Anordnung von dem Energieversorgungsnetz versorgt wird,
- zumindest einen zweiten Traktionswechselrichter, der gleichspannungsseitig mit dem zweiten Gleichspannungszwischenkreis verbunden ist und an dessen Wechselspannungsseite ein oder mehrere Traktionsmotoren des Schienenfahrzeugs angeschlossen sind,
- einen zweiten Hilfsbetriebewechselrichter, der gleichspannungsseitig mit dem zweiten Gleichspannungszwischenkreis verbunden ist und der wechselspannungsseitig mit einer Primärseite eines zweiten Hilfsbetriebetransformators verbunden ist, wobei an einer Sekundärseite des zweiten Hilfsbetriebetransformators über eine zweite elektrische Hilfsbetriebeleitung Hilfsbetriebe angeschlossen sind, wobei die Hilfsbetriebe im Gegensatz zu dem zumindest einen zweiten Traktionsmotor nicht unmittelbar einer Traktion des Schienenfahrzeugs dienen,
- ein erstes Schaltgerät, in dessen eingeschalteten Zustand die erste Hilfsbetriebeleitung mit der zweiten Hilfsbetriebeleitung verbunden ist.

Bei dem ersten Schaltgerät, das eine elektrische Leitungsverbindung (vorzugsweise eine dreiphasige Leitungsverbindung) zwischen der ersten und der zweiten Hilfsbetriebeleitung öffnen und schließen kann, kann es sich insbesondere um ein Schaltgerät handeln, das in einer Leitungsverbindung der Hilfsbetriebeleitungen auf der Sekundärseite der Hilfsbetriebetransformatoren angeordnet ist. Vorzugsweise ist in diesem Fall zusätzlich ein zweites Schaltgerät vorgesehen, in dessen eingeschalteten Zustand die Primärseiten des ersten Hilfsbetriebetransformators und des zweiten Hilfsbetriebetransformators miteinander verbunden sind. Bei diesem Schaltgerät handelt es sich im Falle von mehrphasigen Hilfsbetriebeleitungen dementsprechend ebenfalls um ein mehrpoliges Schaltgerät. Die einzelnen Phasen der Hilfsbetriebeleitungen sollen durch das erste oder zweite Schaltgerät alle voneinander getrennt werden können.

Diese verschiedenen Schalter und Schaltgeräte ermöglichen es insbesondere, zum Zweck einer optimierten Energieübertragung von der netzunabhängigen Energieversorgungseinheit lediglich einen oder auch beide Gleichspannungszwischenkreise mit elektrischer Energie zu speisen. Je nach Betriebssituation kann so z.B. eine möglichst hohe Traktionszugkraft erzielt werden.

Insbesondere kann eine Steuerungseinrichtung zur Steuerung sämtlicher Schalter und Schaltgeräte vorgesehen sein, die abhängig von dem gewählten Betriebszustand und abhängig von der momentan vorliegenden Traktionsanforderung des Fahrzeugführers automatisch einen entsprechenden Schaltzustand sämtlicher Schalter und Schaltgeräte einstellt, um die gewünschte Traktionszugkraft zumindest an einem der zur Verfügung stehenden Fahrmotoren zu erzeugen.

Die Leitungen des ersten Gleichspannungszwischenkreises können über ein drittes Schaltgerät zweipolig mit den Leitungen des zweiten Gleichspannungszwischenkreises verbunden werden oder getrennt werden. Auf eine solche weitere Verbindungsmöglichkeit des ersten Teilsystems mit dem zweiten Teilsystem kann jedoch auch verzichtet werden, um die folgende Betriebsweise zu ermöglichen:
Zur Leistungssteigerung der insgesamt erreichbaren Traktion kann auf der Primärseite und/oder auf der Sekundärseite der Hilfsbetriebetransformatoren eine Leitungsverbindung zwischen der ersten Hilfsbetriebeleitung und der zweiten Hilfsbetriebeleitung hergestellt sein, so dass die Einspeisung von elektrischer Energie der netzunabhängigen Energieversorgungseinheit auf die Zwischenkreise weitgehend symmetrisch erfolgt, d.h. die beiden Gleichspannungszwischenkreise, sofern (wie bevorzugt) die Hilfsbetriebewechselrichter in der gleichen Weise betrieben werden, beide Gleichspannungszwischenkreise dieselbe elektrische Energie von der netzunabhängigen Einheit empfangen können. Ob die beiden Gleichspannungszwischenkreise tatsächlich mit derselben elektrischen Leistung aus der Einheit versorgt werden, hängt davon ab, ob die an den Gleichspannungszwischenkreisen angeschlossenen Traktionsmotoren auch mit der gleichen Leistung betrieben werden.

Wenn die erwähnte zweipolige Schalteinrichtung geschlossen ist und daher die beiden Gleichspannungszwischenkreise miteinander verbunden sind, kann ebenfalls eine symmetrische Versorgung der Gleichspannungszwischenkreise von der netzunabhängigen Einheit stattfinden. Auch in diesem Fall wird bevorzugt, dass die Hilfsbetriebeleitungen auf der Sekundärseite und optional auch auf der Primärseite der Hilfsbetriebetransformatoren miteinander verbunden sind. Die Verbindung auf der Sekundärseite hat den Vorteil, dass die netzunabhängige Einheit Energie über zwei Hilfsbetriebetransformatoren in die Zwischenkreise einspeisen kann.

Durch die Leitungsverbindung und das entsprechende Schaltgerät auf der Sekundärseite der Hilfsbetriebeleitungen kann die Einspeisung der elektrischen Energie von der netzunabhängigen Einheit über mehrere Hilfsbetriebetransformatoren erfolgen, die sowohl sekundärseitig als auch primärseitig durch ein mehrpoliges Schaltgerät parallel geschaltet sind. Insbesondere durch Schalter oder Schaltgeräte unmittelbar an der Wechselspannungsseite der Hilfsbetriebe-Wechselrichter kann die elektrische Leistung, die zur Speisung des oder der Zwischenkreise von der netzunabhängigen Einheit aufgebracht wird, wahlweise lediglich auf einen der Zwischenkreise oder auf beide Zwischenkreise übertragen werden.

Entsprechendes gilt für den Fall, dass mehr als zwei Gleichspannungszwischenkreise vorhanden sind. Schalter zum Verbinden der Zwischenkreise, der an die einzelnen Zwischenkreise angeschlossenen Hilfsbetriebeleitungen und zum Abtrennen der Hilfsbetriebewechselrichter von der zugeordneten Hilfsbetriebeleitung können bei mehr als zwei Gleichspannungszwischenkreisen in entsprechender Weise wie oben beschrieben vorhanden sein.

Wenn mehrere Gleichspannungszwischenkreise mit jeweils zumindest einem daran angeschlossenen Traktionswechselrichter zur Verfügung stehen, wird im Fall einer hohen erforderlichen Anfahrzugkraft bevorzugt, dass alle Fahrmotoren über die entsprechenden, damit verbundenen Traktionswechselrichter betrieben werden. Dies bedeutet, dass alle Gleichspannungszwischenkreise mit angeschlossenen Traktionswechselrichtern auch dann mit elektrischer Energie zu versorgen sind, wenn die Anordnung nicht am Energieversorgungsnetz betrieben wird. Insbesondere können die oben beschriebenen verschiedenen Möglichkeiten hinsichtlich der Schaltzustände der Schalter und Schaltgeräte dazu genutzt werden.

Wenn jedoch die momentan verfügbare Einspeiseleistung, welche von der netzunabhängigen Versorgungseinheit für die Traktion des Schienenfahrzeugs zur Verfügung steht, optimal ausgenutzt werden soll, wird abhängig von der momentanen Fahrzeuggeschwindigkeit, sowie den Verlusten in Traktionsmotor und Wechselrichter vorzugsweise lediglich ein Teil der Traktionsmotoren oder auch nur ein einziger Traktionsmotor über den damit verbundenen Traktionswechselrichter oder die damit verbundenen Traktionswechselrichter mit elektrischer Energie versorgt. Insbesondere die beiden in den vorangegangenen Absätzen beschriebenen Vorgänge werden vorzugsweise von einer Steuerungseinrichtung derart gesteuert, dass möglichst viel Energie gespart und daher die Leistung der netzunabhängigen Versorgungseinheit optimal genutzt wird. Die Steuerungseinrichtung steuert die Vorgänge z. B. entsprechend den Anforderungen (die z.B. vom Fahrzeugführer vorgegeben werden, etwa hohe Zugkraft oder ökonomischer Umgang mit der zur Verfügung stehenden elektrischen Leistung) die zur Verfügung stehenden Schalter und Schaltgeräte entsprechend an und öffnet oder schließt damit (oder behält damit den momentanen Schaltzustand bei), um auf diese Weise das gewünschte Ergebnis zu erzielen.

Außerdem wird es bevorzugt, dass das benötigte Drehmoment der Traktionsmotoren bei dem kleinstmöglichen Motorstrom eingestellt wird und/oder der magnetische Fluss der Maschine soweit wie möglich reduziert wird. Wenn die benötigte elektrische Leistung lediglich von der netzunabhängigen Versorgungseinheit bereitgestellt wird, hilft dies, die zur Verfügung stehende Leistung besser zu nutzen und insbesondere bei einer hohen Zugkraft mit einem Minimum an Einspeiseleistung auszukommen.

Die Steuerung der Schalter und Schaltgeräte des Energieversorgungssystems ist vorzugsweise so ausgestaltet, dass abhängig von der zur Verfügung stehenden elektrischen Leistung oder immer, wenn lediglich elektrische Leistung von der netzunabhängigen Einheit generiert wird, Hilfsbetriebe abgeschaltet und/oder zeitweise abgeschaltet werden. Hierzu sind die Hilfsbetriebe entweder mit einer steuerbaren Schaltmöglichkeit versehen oder ist ihre Leitungsverbindung zu der Hilfsbetriebeleitung mit einer steuerbaren Schalteinrichtung versehen. Z.B. kann daher die von den Hilfsbetrieben benötigte Leistung während eines Zeitraumes reduziert werden, in dem eine besonders hohe Traktionsleistung benötigt wird. Welche Hilfsbetriebe z.B. nicht abgeschaltet werden können und welche Hilfsbetriebe abwechselnd und/oder intermittierend ein- und ausgestaltet werden können, wird noch anhand eines Ausführungsbeispiels in der Figurenbeschreibung beschrieben.

Die Erfindung betrifft ferner eine Lokomotive mit der erfindungsgemäßen Anordnung.

Ausführungsbeispiele der Erfindung werden nun unter Bezugnahme auf die beigefügte Zeichnung beschrieben. In der folgenden Kurzbeschreibung der Zeichnung werden auch die Figuren 1 und 2 genannt, die jedoch Ausgestaltungen aus dem Stand der Technik zeigen und eingangs beschrieben wurden:
- Fig. 1: schematisch ein elektrisches Energieversorgungssystem eines Schienenfahrzeugs, das über einen Oberleitungs-Fahrdraht an ein Energieversorgungsnetz elektrisch angeschlossen ist und das eine Motor-Generator-Kombination aufweist, die bei Bedarf eine der elektrischen Netzleistung annähernd entsprechende elektrische Leistung erzeugen kann,
- Fig. 2: eine Anordnung ähnlich der in Fig. 1, wobei jedoch an der Sekundärseite des Haupttransformators zwei Wicklungen vorgesehen sind, die einen Gleichspannungszwischenkreis jeweils über einen Gleichrichter mit elektrischer Energie versorgen können, und wobei der Generator der Motor-Generator-Kombination über eine Schalteinrichtung an drei Phasen der Sekundärwicklungen des Haupttransformators angeschlossen ist,
- Fig. 3: schematisch eine erste Ausführungsform einer Anordnung, bei der die Motor-Generator-Kombination elektrisch an die Hilfsbetriebeleitung angeschlossen ist,
- Fig. 4: eine Anordnung ähnlich der in Fig. 3, wobei jedoch die Netzseite des Gleichspannungszwischenkreises an ein elektrisches Gleichspannungsnetz angeschlossen ist,
- Fig. 5: eine Anordnung mit zwei, jeweils über einen Gleichrichter an eine separate Sekundärwicklung des Haupttransformators angeschlossenen Gleichspannungszwischenkreisen, die jeweils über einen Traktionswechselrichter zumindest einen Traktionsmotor und über einen Hilfsbetriebewechselrichter Hilfsbetriebe an einer Hilfsbetriebeleitung speisen, und
- Fig. 6: eine Anordnung wie in Fig. 5 dargestellt, wobei jedoch außerdem ein zusätzlicher Energiespeicher vorgesehen ist.

Fig. 3 zeigt eine vereinfachte Grundschaltung für Systeme, die am Wechselstromfahrdraht betrieben werden können. Für gleiche oder funktionsgleiche Teile und Elemente werden dieselben Bezugszeichen wie in Fig. 1 und Fig. 2 verwendet. Die Gleichspannung in dem Gleichspannungszwischenkreis 11 ist mit UD bezeichnet. Sie liegt an den Polen eines Kondensators an.

Die Kombination aus dem Motor 81, insbesondere ein Dieselmotor und dem Generator 91 ist über einen Trennschalter 101 mit der Hilfsbetriebeleitung 111 verbunden.

Bei Betrieb am Netz erfolgt die Einspeisung über den Transformator 131, den Einspeise-Pulsgleichrichter 141 auf den Traktionszwischenkreis (Gleichspannungszwischenkreis) 11. Der Traktionswechselrichter 21 speist den oder die Traktionsmotoren 31 und wandelt die Gleichspannung UD in eine spannungs- und frequenzvariable Drehspannung um.

In den Fig. 3 -6 sind vereinfacht jeweils immer nur ein Einspeisepulsgleichrichter und ein Traktionswechselrichter zur Speisung von zwei Fahrmotoren (Traktionsmotoren) gezeigt. Bei höheren Leistungen erfolgt die Einspeisung über zwei oder mehr als zwei Pulsgleichrichter die über getrennte Transformatorsekundärwicklungen auf den Zwischenkreis 11 speisen. Die Traktionsmotoren werden oft durch jeweils separate Wechselrichter in Einzelspeisung ausgeführt und nicht wie in Fig. 3 gezeigt in Gruppenspeisung. Es kann auch lediglich ein Traktionsmotor an den Zwischenkreis 11 angeschlossen sein.

Im regulären Netzbetrieb speist der Hilfsbetriebewechselrichter 41 über den Hilfsbetriebetransformator 51 die Hilfsbetriebe 71 mit fester oder auch (bei anderer Betriebsweise bzw. bei Hilfsbetrieben andere Art) mit variabler Frequenz. Die üblichen Nennwerte der Hilfsbetriebeleitung liegen bei 480 V / 60 Hz bzw. 400 V / 50 Hz.

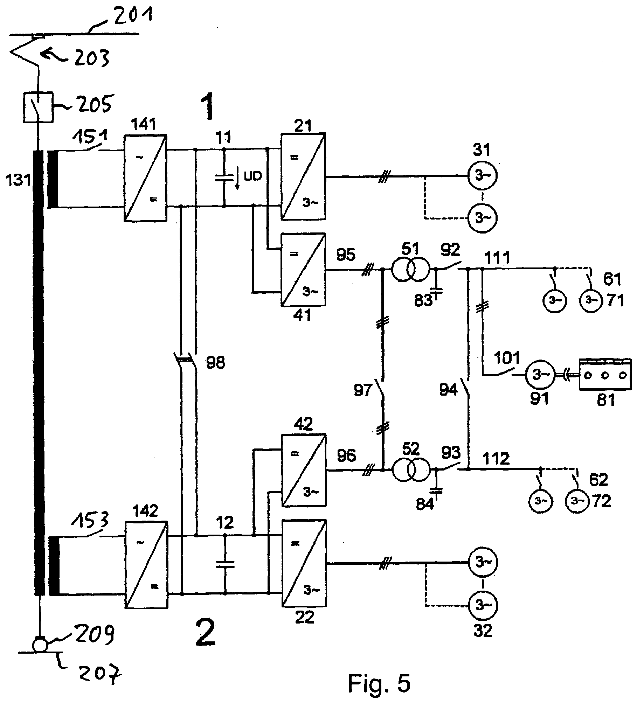

Um die Pulsspannungen des Hilfsbetriebewechselrichters an der Hilfsbetriebesammelschiene 111 zu glätten, kann zwischen Hilfsbetriebewechselrichter 41 und Sammelschiene 111 ein Tiefpassfilter bestehend aus Induktivität und Kapazität zwischengeschaltet sein, der in Fig. 3 nicht gezeigt ist. Fig. 5 zeigt jedoch für eine andere Ausführungsform Kondensatoren 83, 84 derartiger Tiefpassfilter. Durch das Filter ergibt sich an der Sammelschiene 111 eine annähernd sinusförmige Spannung. Die Induktivität kann als diskrete 3-phasige Drossel ausgeführt sein oder auch wie meist üblich über eine erhöhte Streuinduktivität des Hilfsbetriebetransformators realisiert werden.

Der Hilfsbetriebewechselrichter 41 ist ein 3-phasiger Spannungswechselrichter, dessen positive und negative Gleichspannungsanschlüsse mit dem Traktionszwischenkreis 11 verbunden sind.

Bei fahrdrahtlosem Betrieb speist die Energieversorgungseinheit mit dem Generator 91 und der Verbrennungskraftmaschine 81 über das Schaltgerät 101 auf die Hilfbetriebesammelschiene 111 und versorgt so direkt die für den Betrieb erforderlichen Hilfsbetriebe 71. Die Leistungsübertragung zum Traktionszwischenkreis erfolgt weiter über den Hilfsbetriebetransformator 51 und den Hilfsbetriebewechselrichter 41. Die gewünschte Zwischenkreisspannung in Höhe von mindestens dem 0,5 bis 0,7 fachen der Nenn-Zwischenkreisspannung kann durch geeignete Wahl des Übersetzungsverhältnisses des Hilfsbetriebetransformators 51 auf passive Art durch die 6-pulsige Diodengleichrichtung des Hilfsbetriebewechselrichters 41 erreicht werden, ohne dass dieser Wechselrichter aktiv takten muss.

Falls eine definiert geregelte Zwischenkreisspannung gewünscht ist, so kann der Hilfsbetriebewechselrichter 41 als Pulsgleichrichter getaktet werden und wandelt die an der Sammelschiene 111 durch den Generator eingespeiste Wechselspannung in eine Gleichspannung UD vorgegebener Höhe um.

In Fig. 4 ist eine vereinfachte Prinzipschaltung für Anwendung am Gleichstromfahrdraht gezeigt. Es werden lediglich die Unterschiede zu Fig. 3 beschrieben. Beim Betrieb am DC-Netz erfolgt die übliche Einspeisung über eine Filterdrossel 125 direkt zum Traktionszwischenkreis 11 oder durch Zwischenschaltung eines zusätzlichen Filters und Choppers 121 zum Traktionszwischenkreis 11.

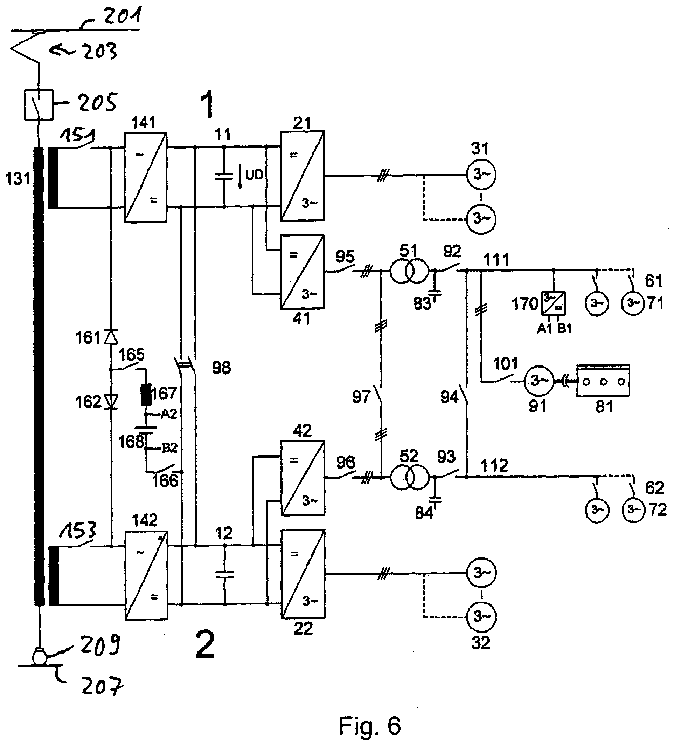

Fig. 5 und 6 zeigen eine vereinfachte Anordnung mit zwei Traktionsstromrichtern 1 und 2, deren Zwischenkreise 11, 12 über ein Schaltgerät 98 verbunden werden können. Stromrichter 1 speist die beiden Traktionsmotoren 31 und besteht im Wesentlichen aus Eingangspulsgleichrichter 141, Traktionszwischenkreis 11, Traktionswechselrichter 21, Hilfsbetriebewechselrichter 41 und dem Hilfsbetriebetransformator 51. Stromrichter 2, zur Speisung der beiden Fahrmotoren 32, besteht aus den gleichen Grundkomponenten Eingangspulsgleichrichter 142, Traktionszwischenkreis 12, Traktionswechselrichter 22, Hilfsbetriebewechselrichter 42 und Hilfsbetriebetransformator 52.

Damit eine möglichst hohe Leistung auf einen oder auch auf beide Zwischenkreise 11 und 12 übertragen werden kann, ohne die Hilfsbetriebetransformatoren 51, 52 überdimensionieren zu müssen, können beide Transformatoren 51, 52 auf der Sekundärseite (Hilfsbetriebeseite) durch das Schaltgerät 94 und optional auch auf der Primärseite durch das Schaltgerät 97 verbunden werden. Bei Störung eines Stromrichters, z. B. Stromrichter 1, kann dieser durch Öffnen des Schaltgerätes 95 (Fig. 6) und falls vorhanden des Schaltgeräts 98 von der Versorgung getrennt werden.

In Fig. 6 ist zur Leistungssteigerung ein zusätzlicher elektrischer Energiespeicher 168 ergänzt. Über eine Induktivität 167, ein Schaltgerät 165 und optional über zusätzliche Entkopplungsdioden 161, 162 ist ein Pol des Energiespeichers 168 mit einem Wechselstromeingang des oder der Einspeisepulsgleichrichter 141, 142 verbunden. Wenn das Elektrische Energieversorgungen System nicht am Energieversorgungsnetz betrieben wird, arbeitet eine Phase des Pulsgleichrichters 141 und/oder 142 gemäß einer bevorzugten Ausgestaltung der Erfindung als Hochsetzsteller und setzt die Spannung des Energiespeichers (z. B. ca. 70 V - 300 V) auf die gewünschte Zwischenkreisspannung UD hoch. Der andere Pol des Energiespeichers ist über einen Schaltkontakt 166 mit dem negativen Pol des Zwischenkreises 12 (oder auch bei geschlossenem Schalter 98, mit Zwischenkreis11) verbunden. Die Aufladung des Energiespeichers kann bei Überschussenergie direkt aus dem Zwischenkreis 11 über den Einspeisepulsgleichrichter 141, 142 vorgenommen werden. In diesem Fall entfallen die beiden Entkopplungsdioden 161, 162 und eine Phase des Einspeisepulsgleichrichters arbeitet als Tiefsetzsteller und wandelt die erhöhte Zwischenkreisspannung UD in die niedrigere Spannung des Energiespeichers um.

Aus Fig. 6 ist eine konkrete Ausführungsform entnehmbar, bei der der zusätzliche Energiespeicher 168 (dies gilt auch für eine andere Ankopplung des zusätzlichen Energiespeichers 168 an den oder die Gleichspannungszwischenkreise) von einem an eine Hilfsbetriebeleitung 111 angeschlossenen Ladegerät 170 aufladbar ist. Das Ladegerät 170 weist an seiner Gleichspannungsseite Anschlüsse A1, B1 auf, die mit den gegenpoligen Anschlüssen A2, B2 des zusätzlichen Energiespeichers 168 verbunden sind.

Um mit einer Energieversorgungseinheit (Motor-Generator Kombination 81, 91) kleiner Leistung (z. B. im Bereich 150 kW-250 kW) z. B. eine Lokomotive mit 800-1700 t schwerem Zug zu bewegen, können spezielle Steuerungsmaßnahmen im Bereich des Energiemanagements und der Traktionssteuerung durchgeführt werden, um mit der verfügbaren kleinen Einspeiseleistung ein Maximum an Traktionszugkraft zu erhalten. Zur optimalen Energieausnutzung werden gemäß bestimmter Ausgestaltung der Erfindung einer der folgenden Verfahrensschritte, Maßnahmen und/oder Steuerungsroutinen angewendet, oder beliebige Kombinationen davon angewendet:
- Alle Hilfsbetriebeverbraucher größerer Leistung (z. B. größer als 2 kW werden) werden durch Schaltgeräte 62 abschaltbar ausgeführt und bei Bedarf abgeschaltet.
- Bei Traktionsanforderung, insbesondere beim Anfahren, werden alle Hilfsbetriebe, die nicht benötigt werden, abgeschaltet, z. B. bis auf die Stromrichterkühlmittelpumpe, den Luftkompresser für die Bremsanlage und einige Kleinverbraucher alle Hilfsbetriebeverbraucher abgeschaltet, um ein Maximum an Traktionsleistung verfügbar zu haben.
- Bei Kurzzeitbelastung und abgeschalteten Hilfsbetrieben (Lüfter, Kühlkreislauf usw.) wird die von elektrischen Bauteilen (wie der Wicklung eines Traktionsmotors) erzeugte Verlustwärme nicht oder nur eingeschränkt abtransportiert. Vielmehr wird diese Wärme durch die Wärmekapazität der an der elektrischen Energieübertragung beteiligten Bauteile (z. B. Material der Wicklungen des Transformators 51, 52) und des Stromrichterkühlmittels aufgenommen. Insbesondere bei längerem Betrieb werden abwechselnd und/oder intermittierend Hilfsbetriebeverbraucher 72 (z. B. Lüfter) zu- und wieder abgeschaltet, um Überhitzungen in den Bauteilen und Kühlmitteln zu vermeiden.
- Abhängig vom Adhäsionszustand (Rad-Schiene-Kontakt), von der angehängten Zuglast und von der Geschwindigkeit wird die Traktion mit vier, zwei oder auch nur einem Fahrmotor (Einzelmotorspeisung) erzeugt.
- Um mit minimalem Fahrmotorstrom ein Maximum an Drehmoment der Fraktionsmotoren und ein Minimum an Motorverlusten zu erhalten, wird der Fluss der Maschine verlustleistungsoptimiert abgesenkt.
- Durch gezielte bedarfsweise Entnahme von Energie aus dem zusätzlichen Energiespeicher 168 kann die Traktionsleistung kurzzeitige um 40 bis 100% gesteigert werden.

## Patentansprüche

1. Anordnung zum Betreiben von Verbrauchern in einem Schienenfahrzeug mit elektrischer Energie, wobei die Anordnung wahlweise von einem Energieversorgungsnetz oder von einer netzunabhängigen elektrischen Energieversorgungseinheit, insbesondere einer Motor-Generator-Kombination (81, 91), mit elektrischer Energie versorgbar ist, wobei die Anordnung Folgendes aufweist:
• einen Gleichspannungszwischenkreis (11), der mit dem Energieversorgungsnetz verbunden ist, wenn die Anordnung von dem Energieversorgungsnetz versorgt wird,
• zumindest einen Traktionswechselrichter (21), der gleichspannungsseitig mit dem Gleichspannungszwischenkreis (11) verbunden ist und an dessen Wechselspannungsseite ein oder mehrere Traktionsmotoren (31) des Schienenfahrzeugs angeschlossen sind,
• einen Hilfsbetriebewechselrichter (41), der gleichspannungsseitig mit dem Gleichspannungszwischenkreis (11) verbunden ist und der wechselspannungsseitig mit einer Primärseite eines Hilfsbetriebetransformators (51) verbunden ist, wobei an einer Sekundärseite des Hilfsbetriebetransformators über eine elektrische Hilfsbetriebeleitung (111) Hilfsbetriebe (71) angeschlossen sind, wobei die Hilfsbetriebe (71) im Gegensatz zu dem zumindest einen Traktionsmotor (31) nicht unmittelbar einer Traktion des Schienenfahrzeugs dienen,
**dadurch gekennzeichnet,**
**dass** die elektrische Energieversorgungseinheit elektrisch mit der Hilfsbetriebeleitung (111) verbunden ist, sodass bei Versorgung der Anordnung von der elektrischen Energieversorgungseinheit (81, 91) von der Einheit (81, 91) erzeugte elektrische Energie über die Hilfsbetriebeleitung (111), den Hilfsbetriebetransformator (51) und den Hilfsbetriebewechselrichter (41) in den Gleichspannungszwischenkreis (11) übertragen wird und für den Betrieb des zumindest einen Traktionsmotors (31) zur Verfügung steht.

2. Anordnung nach dem vorhergehenden Anspruch, wobei der Hilfsbetriebewechselrichter (41) durch einen Schalter (95) von der Primärseite des Hilfsbetriebetransformators (51) trennbar ist.

3. Anordnung nach einem der vorhergehenden Ansprüche, wobei die Anordnung außerdem Folgendes aufweist:
• einen zweiten Gleichspannungszwischenkreis (12), der mit dem Energieversorgungsnetz verbunden ist, wenn die Anordnung von dem Energieversorgungsnetz versorgt wird,
• zumindest einen zweiten Traktionswechselrichter (22), der gleichspannungsseitig mit dem zweiten Gleichspannungszwischenkreis (12) verbunden ist und an dessen Wechselspannungsseite ein oder mehrere Traktionsmotoren (32) des Schienenfahrzeugs angeschlossen sind,
• einen zweiten Hilfsbetriebewechselrichter (42), der gleichspannungsseitig mit dem zweiten Gleichspannungszwischenkreis (12) verbunden ist und der wechselspannungsseitig mit einer Primärseite eines zweiten Hilfsbetriebetransformators (52) verbunden ist, wobei an einer Sekundärseite des zweiten Hilfsbetriebetransformators (52) über eine zweite elektrische Hilfsbetriebeleitung (112) Hilfsbetriebe (72) angeschlossen sind, wobei die Hilfsbetriebe (72) im Gegensatz zu dem zumindest einen zweiten Traktionsmotor (32) nicht unmittelbar einer Traktion des Schienenfahrzeugs dienen,
• ein erstes Schaltgerät (94), in dessen eingeschalteten Zustand die erste Hilfsbetriebeleitung (111) mit der zweiten Hilfsbetriebeleitung (112) verbunden ist.

4. Anordnung nach dem vorhergehenden Anspruch, wobei die Anordnung außerdem Folgendes aufweist:
• ein zweites Schaltgerät (97), in dessen eingeschalteten Zustand die Primärseiten des ersten Hilfsbetriebetransformators (51) und des zweiten Hilfsbetriebetransformators (52) miteinander verbunden sind.

5. Anordnung nach einem der beiden vorhergehenden Ansprüche, wobei die Anordnung außerdem Folgendes aufweist:
• ein drittes Schaltgerät (98), in dessen eingeschalteten Zustand der erste Gleichspannungszwischenkreis (11) und der zweite Gleichspannungszwischenkreis (12) miteinander verbunden sind.

6. Anordnung nach einem der drei vorhergehenden Ansprüche, wobei der zweite Hilfsbetriebewechselrichter (42) durch einen zweiten Schalter (96) von der Primärseite des zweiten Hilfsbetriebetransformators (52) trennbar ist.

7. Anordnung nach einem der vorhergehenden Ansprüche, wobei ein zusätzlicher elektrisch ladbarer und elektrisch entladbarer Energiespeicher (168), der zusätzlich zu der Bordbatterie vorhanden ist, vorgesehen ist, wobei der zusätzliche Energiespeicher (168) über eine Schalteranordnung (165, 166) mit den unterschiedlichen Potentialen des Gleichspannungszwischenkreises (11) verbindbar ist.

8. Anordnung nach dem vorhergehenden Anspruch, wobei der zusätzliche Energiespeicher (168) mit einer Gleichspannungsseite eines Ladegeräts (170) verbunden ist, dessen Wechselspannungsseite mit der Hilfsbetriebeleitung (111) verbunden ist, sodass der zusätzliche Energiespeicher (168) während der Versorgung der Anordnung mit elektrischer Energie aus dem Energieversorgungsnetz aufladbar ist.

9. Anordnung nach einem der beiden vorhergehenden Ansprüche, wobei die elektrischen Anschlüsse (A2, B2) des zusätzlichen Energiespeichers (168) mit einem an dem Gleichspannungszwischenkreis (11, 12) angeschlossenen gepulsten Stromrichter (21, 22, 141, 142; 121) verbindbar sind, so dass die an den elektrischen Anschlüssen (A2, B2) anliegende Gleichspannung von einer Phase des als Hochsetzsteller betriebenen Gleichrichters hochsetzbar ist.

10. Verfahren zum Betreiben von Verbrauchern in einem Schienenfahrzeug mit elektrischer Energie, wobei zumindest ein Traktionsmotor (31) des Schienenfahrzeugs durch Umrichten einer Gleichspannung eines Gleichspannungszwischenkreises (11, 12) betrieben wird und der Gleichspannungszwischenkreis wahlweise von einem Energieversorgungsnetz oder von einer netzunabhängigen elektrischen Energieversorgungseinheit, insbesondere einer Motor-Generator-Kombination (81, 91), mit elektrischer Energie versorgt wird, wobei:
• auch Hilfsbetriebe (71) des Schienenfahrzeugs, die im Gegensatz zu dem zumindest einen Traktionsmotor (31) nicht unmittelbar einer Traktion des Schienenfahrzeugs dienen, über einen Hilfsbetriebewechselrichter (41), der gleichspannungsseitig mit dem Gleichspannungszwischenkreis (11) verbunden ist und der wechselspannungsseitig mit einer Primärseite eines Hilfsbetriebetransformators (51) verbunden ist, und über eine an einer Sekundärseite des Hilfsbetriebetransformators (51) angeschlossene elektrische Hilfsbetriebeleitung (111) mit elektrischer Energie aus dem Gleichspannungszwischenkreis (11) versorgt werden,
• bei Versorgung des Gleichspannungszwischenkreises mit Energie von der elektrischen Energieversorgungseinheit, diese Energie in die Hilfsbetriebeleitung (111) eingespeist wird, durch den Hilfsbetriebetransformator (51) transformiert und durch den Hilfsbetriebewechselrichter (41) gleichgerichtet und in den Gleichspannungszwischenkreis (11) eingespeist wird, um den zumindest einen Traktionsmotor (31) zu betreiben.

11. Verfahren nach dem vorhergehenden Ansprüche, wobei ein zusätzlicher Energiespeicher (168), der zusätzlich zu der Bordbatterie vorhanden ist und der elektrisch ladbar und elektrisch entladbar ist, aufgeladen wird und, bei Versorgung des Gleichspannungszwischenkreises (11) mit Energie von der netzunabhängigen elektrischen Energieversorgungseinheit, durch Verbinden des zusätzlichen Energiespeichers (168) mit dem Gleichspannungszwischenkreis (11) entladen wird, um eine höhere Traktionsleistung des zumindest einen Traktionsmotors (31) zu erreichen.

12. Verfahren nach dem vorhergehenden Anspruch, wobei der zusätzliche Energiespeicher (168), wenn der Gleichspannungszwischenkreis von dem Energieversorgungsnetz mit elektrischer Energie versorgt wird oder wenn überschüssige, nicht für den Betrieb der Hilfsbetriebe und des zumindest einen Traktionsmotors (31) benötigte Leistung zur Verfügung steht, von einer Gleichspannungsseite eines Ladegeräts (170) geladen wird, dessen Wechselspannungsseite mit der Hilfsbetriebeleitung (111) verbunden ist.

13. Verfahren nach einem der beiden vorhergehenden Ansprüche, wobei die elektrischen Anschlüsse (A2, B2) des zusätzlichen Energiespeichers (168) mit einem an dem Gleichspannungszwischenkreis (11, 12) angeschlossenen gepulsten Stromrichter (21, 22, 141, 142; 121) verbunden werden, sodass die an den elektrischen Anschlüssen (A2, B2) anliegende Gleichspannung von einer Phase des als Hochsetzsteller betriebenen Gleichrichters hochgesetzt wird.

14. Verfahren nach einem der vorhergehenden Ansprüche, wobei, wenn der Gleichspannungszwischenkreis von der netzunabhängigen elektrischen Energieversorgungseinheit mit elektrischer Energie versorgt wird, elektrische Energie von einer Bordbatterie des Schienenfahrzeugs in den Gleichspannungszwischenkreis übertragen wird, um eine höhere Traktionsleistung des zumindest einen Traktionsmotors (31) zu erreichen.

## Claims

1. An arrangement for operating consumers in a rail vehicle with electrical energy, wherein the arrangement can be supplied selectively with electrical energy from an energy supply network or from a network-independent electrical energy supply unit, in particular a motor-generator combination (81, 91), wherein the arrangement comprises the following:
• a DC voltage intermediate circuit (11), which is connected to the energy supply network when the arrangement is being supplied from the energy supply network;
• at least one traction inverter (21), which is connected on the DC voltage side to the DC voltage intermediate circuit (11) and which has one or more traction motors (31) of the rail vehicle connected to its AC voltage side; and
• an auxiliary system inverter (41), which on the DC voltage side is connected to the DC voltage intermediate circuit (11) and which on the AC voltage side is connected to a primary side of an auxiliary system transformer (51), wherein auxiliary systems (71) are connected via an electrical auxiliary system line (111) on a secondary side of the auxiliary system transformer, wherein the auxiliary systems (71), in contrast to the at least one traction motor (31), do not serve directly to provide traction of the rail vehicle,
**characterised in that**
the electrical energy supply unit is electrically connected to the auxiliary system line (111) so that when the arrangement is being supplied by the electrical energy supply unit (81, 91), electrical energy generated by the unit (81, 91) is transferred via the auxiliary system line (111), the auxiliary system transformer (51), and the auxiliary system inverter (41) into the DC voltage intermediate circuit (11) and is available for operating the at least one traction motor (31).

2. The arrangement according to the preceding claim, wherein the auxiliary system inverter (41) can be disconnected from the primary side of the auxiliary system transformer (51) by means of a switch (95).

3. The arrangement according to either one of the preceding claims, wherein the arrangement additionally comprises the following:
• a second DC voltage intermediate circuit (12) that is connected to the energy supply network when the arrangement is being supplied from the energy supply network;
• at least one second traction inverter (22), which is connected on the DC voltage side to the second DC voltage intermediate circuit (12) and which has one or more traction motors (32) of the rail vehicle connected to its AC voltage side;
• a second auxiliary system inverter (42), which is connected on the DC voltage side to the second DC voltage intermediate circuit (12) and which is connected on the AC voltage side to a primary side of a second auxiliary system transformer (52), wherein auxiliary systems (72) are connected to a secondary side of the second auxiliary system transformer (52) via a second electrical auxiliary system line (112), wherein the auxiliary systems (72), in contrast to the at least one second traction motor (32), do not serve directly to provide traction of the rail vehicle; and
• a first switching device (94), in the switched-on state of which the first auxiliary system line (111) is connected to the second auxiliary system line (112).

4. The arrangement according to the preceding claim, wherein the arrangement additionally comprises the following:
• a second switching device (97), in the switched-on state of which the primary sides of the first auxiliary system transformer (51) and of the second auxiliary system transformer (52) are connected to each other.

5. The arrangement according to either one of the two preceding claims, wherein the arrangement additionally comprises the following:
• a third switching device (98), in the switched-on state of which the first DC voltage intermediate circuit (11) and the second DC voltage intermediate circuit (12) are connected to each other.

6. The arrangement according to any one of the three preceding claims, wherein the second auxiliary system inverter (42) can be disconnected from the primary side of the second auxiliary system transformer (52) by means of a second switch (96).

7. The arrangement according to any one of the preceding claims, wherein an additional electrically chargeable and electrically dischargeable energy storage device (168) that is present in addition to the vehicle battery is provided, wherein the additional energy storage device (168) is connectable to the various potentials of the DC voltage intermediate circuit (11) via a switch assembly (165, 166).

8. The arrangement according to the preceding claim, wherein the additional energy storage device (168) is connected to a DC voltage side of a charger (170), the AC voltage side of which is connected to the auxiliary system line (111) so that the additional energy storage device (168) can be charged while the arrangement is being supplied with electrical energy from the energy supply network.

9. The arrangement according to either one of the two preceding claims, wherein the electrical connections (A2, B2) of the additional energy storage device (168) are connectable to a pulsed converter (21, 22, 141, 142; 121) hooked up to the DC voltage intermediate circuit (11, 12) so that the DC voltage present at the electrical connections (A2, B2) can be boosted by a phase of the rectifier being operated as a boost converter.

10. A method for operating consumers in a rail vehicle with electrical energy, wherein at least one traction motor (31) of the rail vehicle is operated by converting a DC voltage of a DC voltage intermediate circuit (11, 12), and selectively supplying the DC voltage intermediate circuit with electrical energy from an energy supply network or from a network-independent electrical energy supply unit, in particular a motor-generator combination (81, 91), wherein:
• auxiliary systems (71) of the rail vehicle, which in contrast to the at least one traction motor (31) do not serve directly to provide traction of the rail vehicle, are also supplied with electrical energy from the DC voltage intermediate circuit (11) via an auxiliary system inverter (41) connected on the DC voltage side to the DC voltage intermediate circuit (11) and connected on the AC voltage side to a primary side of an auxiliary system transformer (51), and via an electrical auxiliary system line (111) hooked up to a secondary side of the auxiliary system transformer (51); and
• when supplying the DC voltage intermediate circuit with energy from the electrical energy supply unit, this energy is fed into the auxiliary system line (111), transformed by the auxiliary system transformer (51), and rectified by the auxiliary system inverter (41) and fed into the DC voltage intermediate circuit (11) to operate the at least one traction motor (31).

11. The method according to the preceding claim, wherein an additional energy storage device (168), which is present in addition to the vehicle battery and which is electrically chargeable and electrically dischargeable, is charged and, when the DC voltage intermediate circuit (11) is being supplied with energy from the network-independent electrical energy supply unit, discharged by connecting the additional energy storage device (168) to the DC voltage intermediate circuit (11) in order to achieve a higher traction power of the at least one traction motor (31).

12. The method according to the preceding claim, wherein the additional energy storage device (168), when the DC voltage intermediate circuit is being supplied with electrical energy from the energy supply network or when surplus power not needed for operating the auxiliary systems and the at least one traction motor (31) is available, is charged by a DC voltage side of a charger (170), the AC voltage side (170) of which is connected to the auxiliary system line (111).

13. The method according to one of the two preceding claims, wherein electrical connections (A2, B2) of the additional energy storage device (168) are connected to a pulsed converter (21, 22, 141, 142; 121) hooked up to the DC voltage intermediate circuit (11, 12) so that the DC voltage present at the electrical connections (A2, B2) is boosted by a phase of the rectifier being operated as a boost converter.

14. The method according to any one of the preceding claims, wherein, when the DC voltage intermediate circuit is being supplied with electrical energy from the network-independent electrical energy supply unit, electrical energy from a vehicle battery of the rail vehicle is transferred into the DC voltage intermediate circuit in order to achieve a higher traction power of the at least one traction motor (31).

## Revendications

1. Ensemble servant à faire fonctionner des consommateurs dans un véhicule sur rails avec de l'énergie électrique, dans lequel l'ensemble peut être alimenté en une énergie électrique aux choix par un réseau d'alimentation en énergie ou par une unité d'alimentation en énergie électrique indépendante du réseau, en particulier par une combinaison moteur-générateur (81, 91), dans lequel l'ensemble présente ce qui suit :
- un circuit intermédiaire à tension continue (11), qui est relié au réseau d'alimentation en énergie quand l'ensemble est alimenté par le réseau d'alimentation en énergie ;
- au moins un onduleur de traction (21), qui est relié du côté de la tension continue au circuit intermédiaire à tension continue (11) et au côté de tension alternative duquel un ou plusieurs moteurs de traction (31) du véhicule sur rails sont raccordés ;
- un onduleur d'équipements auxiliaires (41), qui est relié du côté de la tension continue au circuit intermédiaire à tension continue (11) et qui est relié du côté de la tension alternative à un côté primaire d'un transformateur d'équipements auxiliaires (51), dans lequel des équipements auxiliaires (71) sont raccordés à un côté secondaire du transformateur d'équipements auxiliaires par l'intermédiaire d'une ligne d'équipements auxiliaires (111) électrique, dans lequel contrairement à l'au moins un moteur de traction (31), les équipements auxiliaires (71) ne servent pas directement à une traction du véhicule sur rails,
**caractérisé en ce**
**que** l'unité d'alimentation en énergie électrique est reliée de manière électrique à la ligne d'équipements auxiliaires (111) de sorte qu'en cas d'alimentation de l'ensemble par l'unité d'alimentation en énergie (81, 91) électrique, l'énergie électrique produite par l'unité (81, 91) est transférée dans le circuit intermédiaire à tension continue (11) par l'intermédiaire de la ligne d'équipements auxiliaires (111), du transformateur d'équipements auxiliaires (51) et de l'onduleur d'équipements auxiliaires (41) et est fournie pour le fonctionnement de l'au moins un moteur de traction (31).

2. Ensemble selon la revendication précédente, dans lequel l'onduleur d'équipements auxiliaires (41) peut être coupé du côté primaire du transformateur d'équipements auxiliaires (51) par un commutateur (95).

3. Ensemble selon l'une quelconque des revendications précédentes, dans lequel l'ensemble présente en outre ce qui suit :
- un deuxième circuit intermédiaire à tension continue (12), qui est relié au réseau d'alimentation en énergie quand l'ensemble est alimenté par le réseau d'alimentation en énergie ;
- au moins un deuxième onduleur de traction (22) qui est relié du côté de la tension continue au deuxième circuit intermédiaire à tension continue (12) et au côté de tension alternative duquel un ou plusieurs moteurs de traction (32) du véhicule sur rails sont raccordés ;
- un deuxième onduleur d'équipements auxiliaires (42), qui est relié du côté de la tension continue au deuxième circuit intermédiaire à tension continue (12) et qui est relié du côté de la tension alternative à un côté primaire d'un deuxième transformateur d'équipements auxiliaires (52), dans lequel des équipements auxiliaires (72) sont raccordés à un côté secondaire du deuxième transformateur d'équipements auxiliaires (52) par l'intermédiaire d'une deuxième ligne d'équipements auxiliaires (112) électrique, dans lequel contrairement à l'au moins un deuxième moteur de traction (32), les équipements auxiliaires (72) ne servent pas directement à une traction du véhicule sur rails,
- un premier appareil de commutation (94), dans l'état activé duquel la première ligne d'équipements auxiliaires (111) est reliée à la deuxième ligne d'équipements auxiliaires (112).

4. Ensemble selon la revendication précédente, dans lequel l'ensemble présente par ailleurs ce qui suit :
- un deuxième appareil de commutation (97), dans l'état activé duquel les côtés primaires du premier transformateur d'équipements auxiliaires (51) et du deuxième transformateur d'équipements auxiliaires (52) sont reliés entre eux.

5. Ensemble selon l'une quelconque des deux revendications précédentes, dans lequel l'ensemble présente par ailleurs ce qui suit :
- un troisième appareil de commutation (98), dans l'état activé duquel le premier circuit intermédiaire à tension continue (11) et le deuxième circuit intermédiaire à tension continue (12) sont reliés entre eux.

6. Ensemble selon l'une quelconque des trois revendications précédentes, dans lequel le deuxième onduleur d'équipements auxiliaires (42) peut être coupé du côté primaire du deuxième transformateur d'équipements auxiliaires (52) par un deuxième commutateur (96).

7. Ensemble selon l'une quelconque des revendications précédentes, dans lequel est prévu un accumulateur d'énergie (168) supplémentaire pouvant être chargé de manière électrique et pouvant être déchargé de manière électrique, qui est présent en plus de la batterie de bord, dans lequel l'accumulateur d'énergie (168) supplémentaire peut être relié à différents potentiels du circuit intermédiaire à tension continue (11) par l'intermédiaire d'un ensemble de commutateurs (165, 166).

8. Ensemble selon la revendication précédente, dans lequel l'accumulateur d'énergie (168) supplémentaire est relié à un côté de tension continue d'un appareil de charge (170), dont le côté de tension alternative est relié à la ligne d'équipements auxiliaires (111) de sorte que l'accumulateur d'énergie (168) supplémentaire peut être chargé en énergie électrique provenant du réseau d'alimentation en énergie au cours de l'alimentation de l'ensemble.

9. Ensemble selon l'une quelconque des deux revendications précédentes, dans lequel les raccords (A2, B2) électriques de l'accumulateur d'énergie (168) supplémentaire peuvent être reliés à un convertisseur de puissance (21, 22, 141, 142 ; 121) pulsé raccordé au circuit intermédiaire à tension continue (11, 12) de sorte que la tension continue appliquée au niveau des raccords (A2, B2) électriques peut être augmentée par une phase de l'onduleur fonctionnant en tant que convertisseur élévateur.

10. Procédé servant à faire fonctionner des consommateurs dans un véhicule sur rails avec une énergie électrique, dans lequel au moins un moteur de traction (31) du véhicule sur rails fonctionne par la conversion d'une tension continue d'un circuit intermédiaire à tension continue (11, 12) et le circuit intermédiaire à tension continue est alimenté en énergie électrique au choix par un réseau d'alimentation en énergie ou par une unité d'alimentation en énergie électrique indépendante du réseau, en particulier par une combinaison moteur-générateur (81, 91), dans lequel :
- des équipements auxiliaires (71) du véhicule sur rails, qui contrairement à l'au moins un moteur de traction (31) ne servent pas directement à une traction du véhicule sur rails, sont alimentés en une énergie électrique provenant du circuit intermédiaire à tension continue (11) par l'intermédiaire d'un onduleur d'équipements auxiliaires (41), qui est relié du côté de la tension continue, au circuit intermédiaire à tension continue (11) et qui est relié du côté de la tension alternative à un côté primaire d'un transformateur d'équipements auxiliaires (51), et par l'intermédiaire d'une ligne d'équipements auxiliaires (111) électrique raccordée à un côté secondaire du transformateur d'équipements auxiliaires (51) ;
- dans le cas de l'alimentation du circuit intermédiaire à tension continue en énergie provenant de l'unité d'alimentation d'énergie électrique, ladite énergie est injectée dans la ligne d'équipements auxiliaires (111), est transformée par le transformateur d'équipements auxiliaires (51) et est redressée par l'onduleur d'équipements auxiliaires (41) et est injectée dans le circuit intermédiaire à tension continue (11) afin de faire fonctionner l'au moins un moteur de traction (31).

11. Procédé selon la revendication précédente, dans lequel un accumulateur d'énergie (168) supplémentaire, qui est présent en plus de la batterie de bord et qui peut être chargé de manière électrique et être déchargé de manière électrique, est chargé et est déchargé, dans le cas de l'alimentation du circuit intermédiaire à tension continue (11) en énergie provenant de l'unité d'alimentation en énergie électrique indépendante du réseau, par la liaison de l'accumulateur d'énergie (168) supplémentaire au circuit intermédiaire à tension continue (11) afin d'atteindre une puissance de traction plus élevée de l'au moins un moteur de traction (31).

12. Procédé selon la revendication précédente, dans lequel l'accumulateur d'énergie (168) supplémentaire, quand le circuit intermédiaire à tension continue est alimenté en énergie électrique par le réseau d'alimentation en énergie ou quand une puissance en excès non requise pour le fonctionnement des équipements auxiliaires et de l'au moins un moteur de traction (31) est fournie, est chargé par un côté de tension continue d'un appareil de charge (170), dont le côté de tension alternative est relié à la ligne d'équipements auxiliaires (111).

13. Procédé selon l'une quelconque des deux revendications précédentes, dans lequel les raccords (A2, B2) électriques de l'accumulateur d'énergie (168) supplémentaire sont reliés à un convertisseur de puissance (21, 22, 141, 142 ; 121) pulsé raccordé au circuit intermédiaire à tension continue (11, 12) de sorte que la tension continue appliquée au niveau des raccords (A2, B2) électriques est augmentée par une phase de l'onduleur fonctionnant en tant qu'onduleur élévateur.

14. Procédé selon l'une quelconque des revendications précédentes, dans lequel, quand le circuit intermédiaire à tension continue est alimenté en énergie électrique par l'unité d'alimentation en énergie électrique indépendante du réseau, de l'énergie électrique est transmise depuis une batterie de bord du véhicule sur rails dans le circuit intermédiaire à tension continue afin d'atteindre une puissance de traction plus élevée de l'au moins un moteur de traction (31).
